# EUROPEAN PATENT SPECIFICATION

(11) **EP 1 954 086 B1**
(45) Date of publication and mention of the grant of the patent: **08.01.2014**
(21) Application number: 06832717.0
(22) Date of filing: 16.11.2006
(51) Int. Cl.: H04L 29/06

(54) **(U)SIM card in server mode, and communication method with client**
(U)SIM-Karte im Servermodus und Kommunikationsverfahren mit Client
Carte (U)SIM en mode serveur et méthode de communication avec client

(30) Priority: 21.11.2005 FR 0553531
(43) Date of publication of application: 06.08.2008
(73) Proprietor: NEC Corporation, Minato-ku Tokyo 108-8001 (JP)
(72) Inventor: ZAPPULLA, Fabrice, F-95600 Eaubonne (FR); DONG, Olivier, F-91210 Draveil (FR); HELAINE, Hubert, F-78570 Andresy (FR)
(74) Representative: MacDougall, Alan John Shaw
(86) International application number: PCT/JP2006/322828
(87) International publication number: WO 2007/058241

(56) References cited:
- EP-A- 1 608 123
- WO-A1-2004/068819
- JP-A- 2005 209 173
- "Smart cards", ETSI STANDARDS, EUROPEAN TELECOMMUNICATIONS STANDARDS INSTITUTE, SOPHIA-ANTIPO, FR, vol. SCP-WG3, no. V710, October 2005 (2005-10), XP014031813, ISSN: 0000-0001
- REES J ET AL: "WEBCARD: A JAVA CARD WEB SERVER", SMART CARD RESEARCH AND ADVANCED APPLICATIONS. IFIP WORKING CONFERENCE ON SMART CARD RESEARCH AND ADVANCED APPLICATIONS, 20 September 2000 (2000-09-20), pages 197-207, XP001013569,
- "Smart Cards", ETSI STANDARDS, EUROPEAN TELECOMMUNICATIONS STANDARDS INSTITUTE, SOPHIA-ANTIPO, FR, vol. SCP-WG1, no. V610, December 2004 (2004-12), XP014027288, ISSN: 0000-0001

## Description

### TECHNICAL FIELD

The present invention relates to a mobile communication, and in particular, to a field of communication utilizing a chip card in a mobile terminal.

### RELATED ART

It has been known that for example, on a GSM network, a subscriber possesses in his or her mobile terminal a chip card, so-called a Subscriber Identity Module (SIM) card including a memory and a microcontroller. The memory saves, in general, files and a directory including an operator's identifier, network associated data, an urgent call number and a telephone directory or the like.

Recently, the SIM card is provided with a new function in which contents of certain files can be protected as a directory by a remote server by use of a Short Message Service (SMS). A latest trend is related to roles which the SIM card is expected to play in association with a General Packet Radio Service (GPRS) network also called 2.5G and a Universal Mobile Telecommunication System (UMTS) also called 3G. In this situation, the SIM card is also referred to as a Universal Integrated Circuit Card (UICC). In the following description, to indicate a card including the SIM function regardless of its generation, a comprehensive term (U)SIM will be employed. In this category, there has been proposed a scheme in which regardless of the connection mode of the mobile terminal, that is, even in the line switching mode (GSM in general) or in the packet mode (GPRS in general), the (U)SIM card can access the terminal and the network. The scheme is known as an abbreviated symbol BIP (Bearer Independent Protocol), and the (U)SIM card can communicate with the mobile terminal using a logical circuit. Therefore, it is called a BIP channel. Generally, it is to be considered that one or a plurality of BIP channels can be set between the card and the terminal. This terminal includes middleware software (middleware) for an application of the (U)SIM card to interact with an application of the terminal. The software is also called a Card Application Toolkit (CAT).

For detailed description of the BIP protocol, reference is to be made to an article ETSI TS102223, in particular, 7th Edition V7.1.0 published in October 2005 (available on the site of HYPERLINK "http://www.etsi.org" www.etsi.org).

According to the BIP protocol, the (U)SIM card can operate, particularly, as a client to send various requests to a remote server. Recently, it has been proposed to contain a server in the (U)SIM card. In this case, a remote client or a local client (i.e., a local browser, an uplet, or the like in the mobile terminal) can transmit an http request to the server contained in the card to acquire, particularly, a web page saved in its memory. Regardless of the situation wherein the (U)SIM card operates in the client mode or in the server mode, the mobile terminal converts the BIP protocol into a TCP/IP protocol and vice versa by the middleware software CAT.

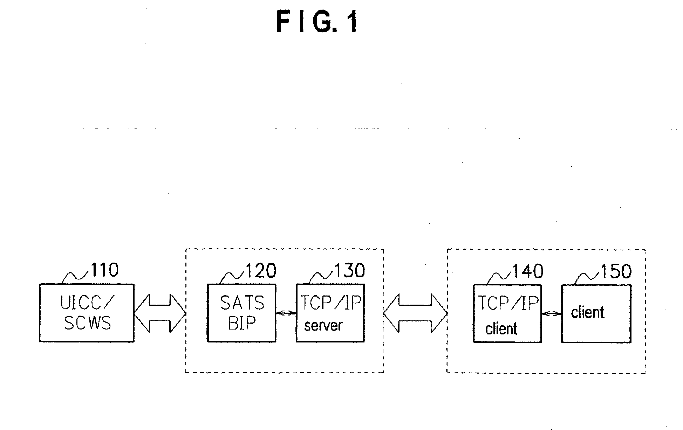

FIG. 1 schematically shows communication between a (U)SIM card operating in the server mode and a client.

It is known that the (U)SIM card (UICC card in this situation) includes a SmartCard Web Server (SCWS) 110, a CAT software module 120 called as an SIM Application Toolkit Server (SATS) in this case to perform a gateway function for the BIP protocol and the TCP/IP protocol, TCP/IP stacks 130 and 140 of the client and the server, and a client 150. The client may be a local client, e.g., a terminal browser or midlet, or a remote application.

According to the current specification of the BIP protocol, a single client connection is acceptable by a BIP channel; hence, if a card server desires to access another client connection, it is required to establish a new channel. Since the number of BIP channels is restricted (although the maximum number is seven according to TS102223 standard, the mobile terminal can support seven or less), the condition for operation is important. For example, if the card desires to open a BIP channel in the client mode when the number of BIP channels being used reaches the maximum, it is required for the card to beforehand close a BIP channel, for example, a BIP channel in the server mode.

Additionally, if a plurality of BIP channels has been set, data cannot be simultaneously exchanged via various channels. In other words, the communication between the mobile terminal and the card is carried out from one BIP channel to another BIP channel in a serial mode.

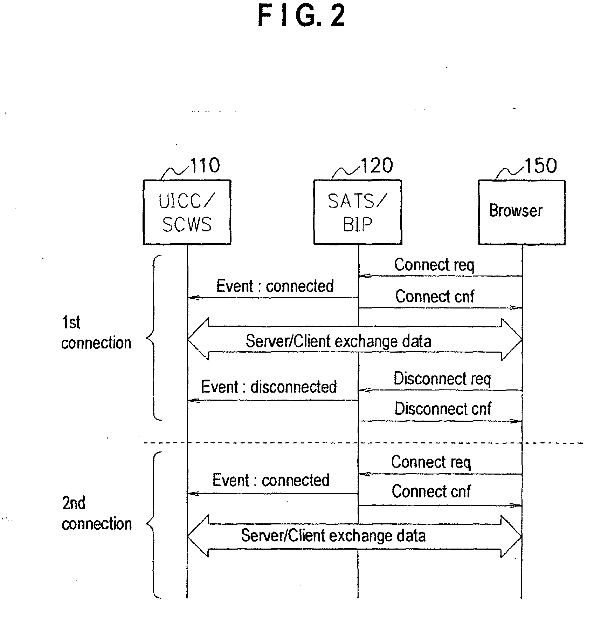

FIG. 2 shows a time-series chart of sever-mode communication between the card and a client, for example, as a local browser. For simplicity, none of the TCP/IP stacks is shown.

It is understood that the server only sequentially supports the connection to the client. Therefore, two connection requests from one and the same client (e.g., by two connection requests HTTP GET) are successively satisfied.

An event message transmitted from the gateway 120 to the server 110 to notify connection/disconnection of connection to the client does not include an identifier of the pertinent connection.

According to the protocol specification HTTP 1.0 and preceding specifications, the TCP connection is closed after the communication of a request and a reply thereto by the default option ("connection: Close" in the request header). However, by designating a header "connection: Keep-Alive" in the request, it is possible to request holding of opening of the connection. In this situation, if the client sends another request, the request uses the previously formed connection. In the protocol specification HTTP 1.1, the opening of connection is held by the default option.

In a situation wherein it is desired to download, for example, the first HTML page and then other objects (video, audio), if the client transmits a plurality of HTTP 1.1 requests in a successive fashion, the requests other than the first request are not received.

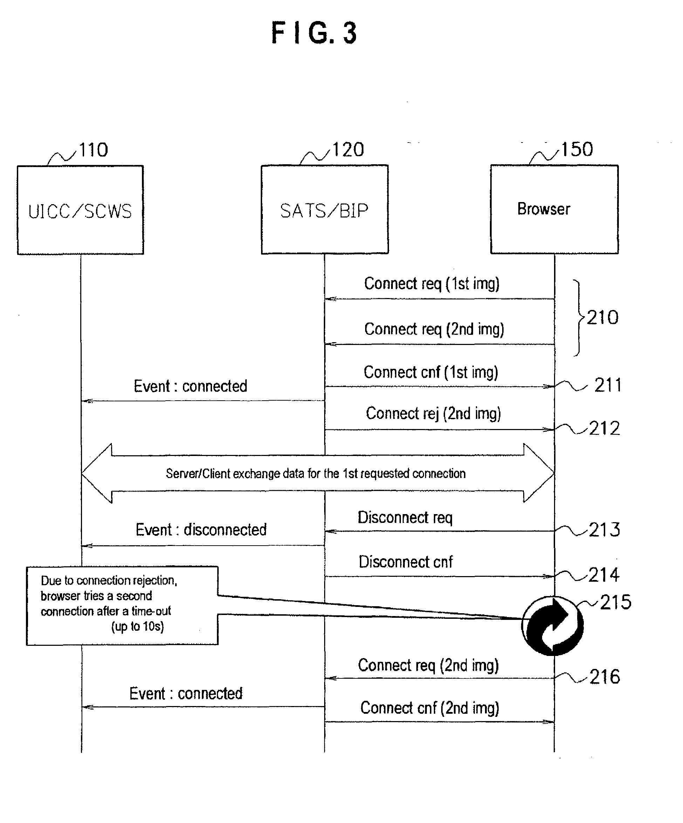

FIG. 3 shows the above situation, that is, a consecutive request 210 from the client (browser 150) to the server 110. Such consecutive request can be processed by the server if the server operates in a so-called "automatic reconnection" mode as prescribed in article 6.4.27.1. of the specification. The connection requested by the first request is confirmed by the client in step 211. Since a single TCP connection is acceptable, the second request is rejected, which is notified to the client in step 211. After data are exchanged via the TCP connection and the BIP channel between the client and the server, the client transmits a disconnection request 213, which is confirmed in step 214.

The browser restarts the second request; at occurrence of a time-out of a timer 215 (of the TCP/IP stack of the browser or the client) set after the first failure in step 212, the browser again requests the connection in step 216. Actually, the timing may be adjusted to ten seconds, which remarkably suppresses the download; it is hence likely that several objects are not downloaded.

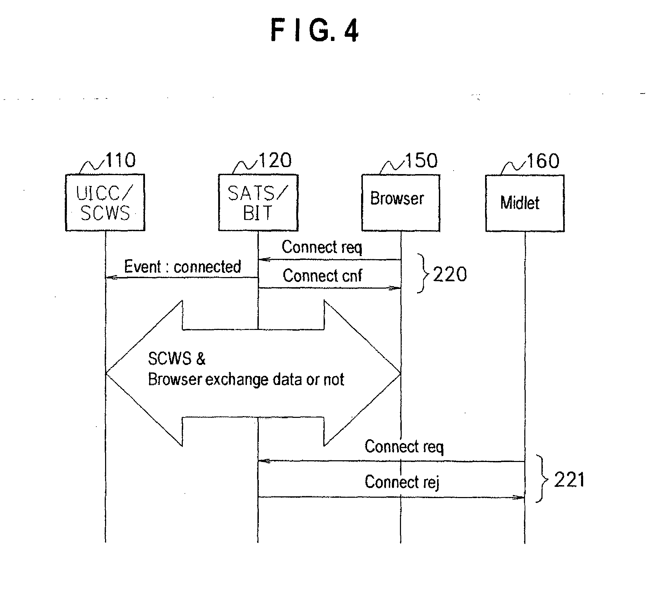

FIG. 4 shows an attempt of communication between the card 110 operating in the server mode and two clients which are two local clients in this situation i.e., a browser in the mobile terminal 150 and a midlet 160 (for example, one set of the mobile terminal) of a Java (registered trademark) application.

As can be here confirmed, after the browser attempts to establish an advantageous connection in 220, a connection request from the midlet fails in 221. This is because a TCP port to be coupled with the BIP channel is not available. Additionally, in a decisive occasion, if the HTTP request of the browser is of a Keep-Alive type (e.g., HTTP1.1 request) and the browser no longer requests new data, the TCP port of the server continues operation even the server is not operating. For example, if the user determines, after downloading one page of the server, to start a new application which desires to access the server, the new application can be developed after a time-out of a (browser's) timer for the first connection.

After all, the current BIP protocol imposes on the server of the card to act for a single client (a case wherein at least only one BIP channel can be opened).

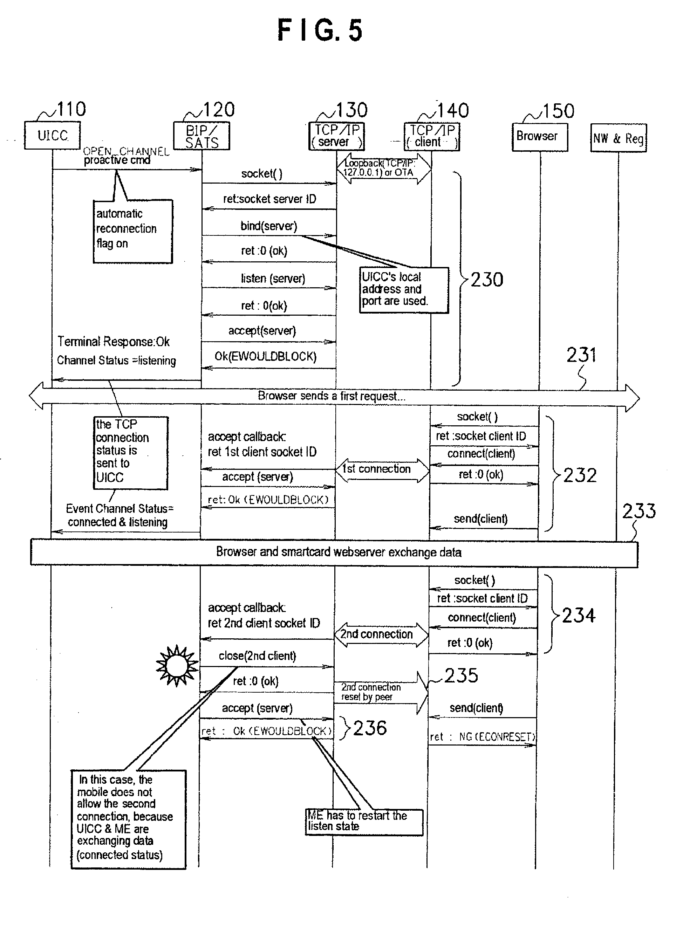

FIG. 5 shows communication between the card 110 operating in the server mode and a client. The server itself is in a so-called "automatic reconnection" mode in conformity with article 6.4.27.1. In short, in a case wherein the server is in this mode, if the TCP connection to the client is disconnected and the gateway is waiting for a new connection, the BIP channel has not been closed (by a close channel command). In this occasion, the server is capable of receiving a second request from the client to set a new TCP connection. This diagram shows the TCP/IP stacks in details.

In the first step 230, the BIP channel is opened by a command "Open Channel" of the BIP protocol. The mobile terminal confirms the situation by an acknowledgement reply "Terminal Response".

In this occasion, the browser transmits the first request in step 231, and the TCP connection is set after the exchange 232. The browser 150 can exchange data with the card 110 as indicated in step 233. If the second request is sent from the browser in 234 before the exchange 233 is finished, the gateway 120 rejects the connection request in step 235 and is then set again to a state to wait for a new connection request in step 236.

### DISCLOSURE OF THE INVENTION

### PROBLEM TO BE SOLVED BY THE INVENTION

It is an exemplary object of the present invention to solve the drawback described above, and in particular, to make it possible that a plurality of simultaneous requests sent from one and the same client or different clients can be processed by a (U)SIM card operating in the server mode.

### MEANS FOR SOLVING THE PROBLEM

Aspects of the invention are disclosed in the appended independent claims. Optional, but advantageous features are disclosed in the appended dependent claims.

Therefore, the present invention is characterized in that the invention is defined by a method of communication between a chip card including a server and one or a plurality of clients in which the card being included in a mobile terminal and communicate via at least one BIP channel with the terminal: and the terminal performs a gateway function between the BIP channel and a plurality of TCP connections for one or a plurality of clients described above.

Therefore, the BIP channel can support the plurality of TCP connections to the one or the plurality of clients and can respond to simultaneous requests.

The method of communication between the server and the gateway includes a first command (Open Channel), the command including a parameter which indicates the terminal the maximum number of TCP connections to be opened for the BIP channel.

In the communication method, the server requesting the terminal for data transmission from one of the TCP connections coupled with the BIP channel can transmit a second command (Receive Data), and (if the server is notified that such data are available), the command includes a parameter to identify the TCP connection.

Advantageously, the communication method may be configured such that the server sends data via a BIP channel to the terminal to request by a third command (Send Data) the terminal to transmit data to the one or the plurality of clients, the command including a parameter to identify a TCP connection to be used by the terminal for transmission.

Advantageously, the communication method may be configured such that the server requests by a fourth command (Close Channel) the terminal to close one or a plurality of TCP connections to be coupled with the BIP channel, the command including a parameter to identify one or a plurality of TCP connections to be closed.

Advantageously, the communication method may be configured such that the terminal transmits "event message" (Data available event) to the server in which the message indicates that data of the one or the plurality of clients are available for the BIP channel and identifies a TCP connection to be coupled with the channel having received data.

Still advantageously, the communication method is configured such that the terminal transmits to the server "event message" (Channel status event) which indicates that a TCP connection to be coupled with the BIP channel has been set or closed and identifies the connection.

As above, the BIP protocol between the chip card and the gateway can support management of the plural TCP connections to be coupled with one and the same channel.

The present invention also configures a format of messages for the protocol.

Additionally, to enable exemplary embodiments of the method described above, the present invention is intended to a chip card including a software unit constructed to generate a command message and a mobile terminal including a software unit constructed to generate an event message.

### BEST MODE FOR CARRYING OUT THE INVENTION

The present invention will be further understood from the description of exemplary embodiments using accompanying drawings.

The fundamental concept of the present invention is to make it possible to couple a plurality of TCP connections with the BIP channel. For this purpose, the BIP protocol between the server contained in the card and the gateway is enhanced to identify to which TCP connection a command is to be applied for a predetermined BIP channel.

Particularly, as will be described later, the present invention employs a configuration in which after this point of time, commands "Receive data", "Send data", and "Close data" of a server and event messages "Data available" and "Status channel" of a mobile terminal as stipulated in the ETSI TS102223 standard are required to include an identifier of a TCP connection to which these commands and messages are applied.

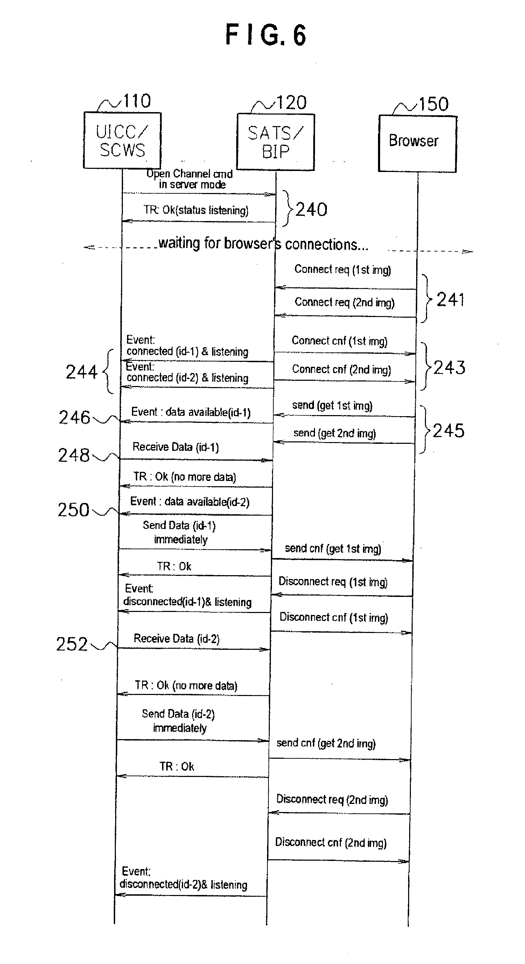

FIG. 6 shows a table of communication in time series between a (U)SIM card operating in the server mode and a client such as a browser of, for example, a mobile terminal when the present invention is embodied exemplarily.

As described above, a BIP channel is set by an exchange 240 between the card and the gateway. A successive request is transmitted by the browser in step 241. As a response thereto, the gateway 120 sets two TCP connections. That is, two TCP ports are opened for these connections. The setup of connections is confirmed by the browser in step 243, and this is notified to the server of the card by an event message "Channel status" in step 244. Thereafter, data are sent from the browser through the TCP connections to the server.

The gateway 120 of the mobile terminal notifies the server in steps 246 and 250 of availability of data at the two respective TCP ports by event messages "Data available". Each message "Data available" indicates an associated TCP connection. As a response thereto, the server requests the gateway by a "Receive data" command to transmit data while explicitly indicating which TCP connection (id-1, id-2) is associated with operation for each request.

It is to be understood that distinct from the time-series table shown in FIG. 6, the second connection request is not rejected, but is directly used.

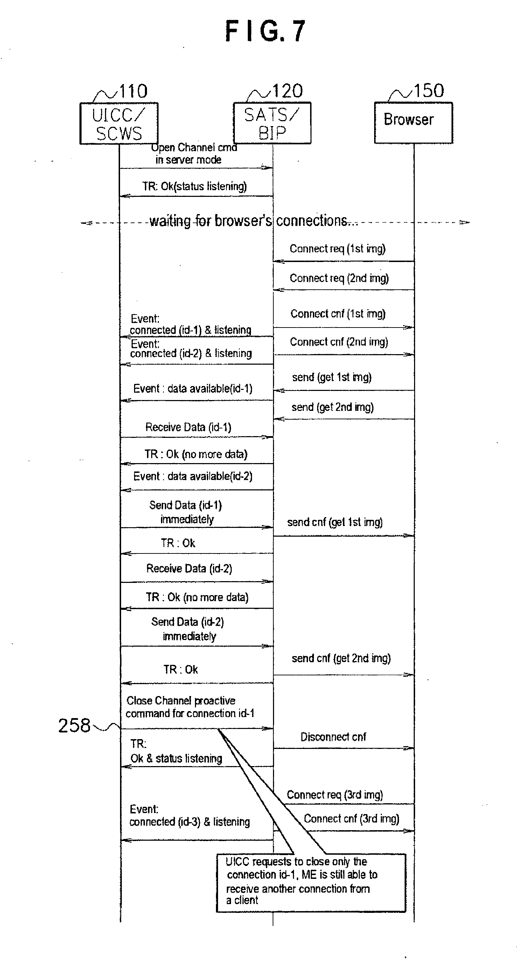

If the data are completely transmitted from one port, the server is capable of independently disconnect the corresponding TCP connection according to the scheme shown in FIG. 7.

As a result, the communication resource is released and is available for another request. This is particularly effective if the number of communication resources has been reached the number of TCP connections to the BIP channel.

In this situation, since all data of the port id-1 have been transmitted to the server, the server determines to close the port. For this purpose, the server sends in step 258 a command "Close channel" identifying a TCP connection to be closed.

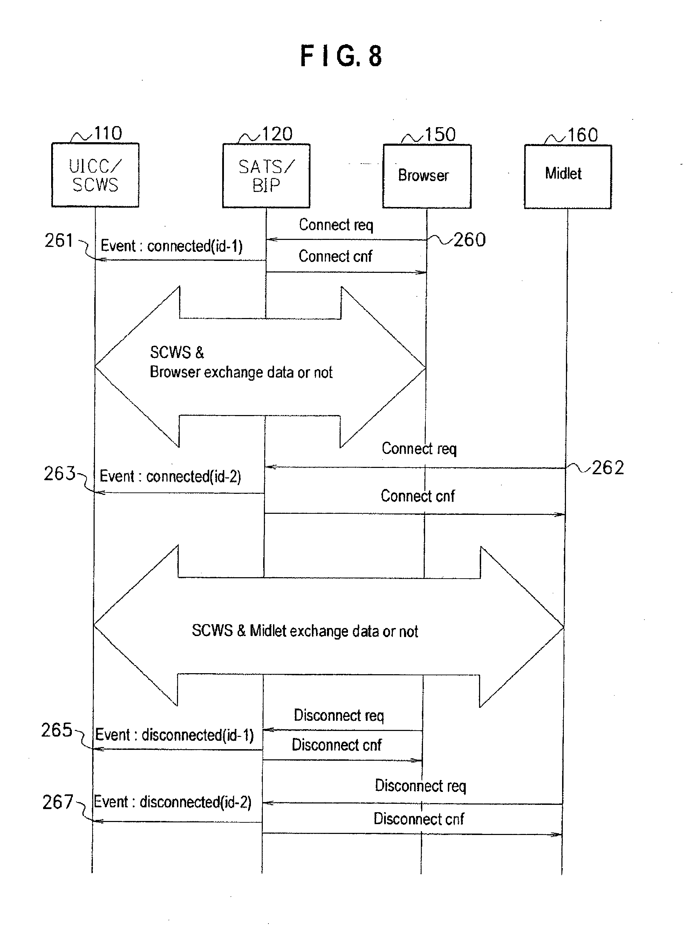

FIG. 8 shows a situation in which two clients, for example, a browser and a midlet of a mobile terminal attempt to connect to a server of a (U)SIM card. By setting two TCP connections, it is possible to immediately cope with two requests 260 and 262. The gateway 120 of the mobile terminal notifies this to the server using event messages "Status channel" 261 and 263 identifying associated TCP connections. Similarly, a disconnection request is notified in steps 265 and 267 by event messages "Status channel" identifying TCP connections to be disconnected.

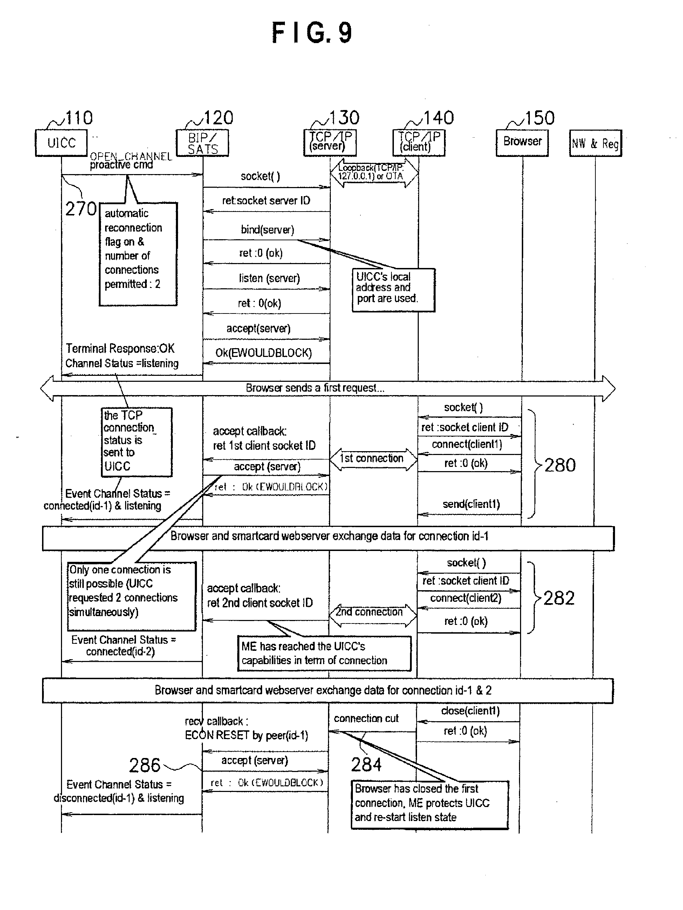

FIG. 9 shows a time-series table of communication between a (U)SIM card and a client such as a browser when the server of the (U)SIM card is in an automatic reconnection mode.

In this mode, the server of the card requests opening of a BIP channel from a mobile terminal using an "Open Channel" command in which the maximum number (two in the example shown) of TCP connections simultaneously supportable by the BIP channel is explicitly indicated. When a first request is sent to the browser, a TCP connection is set as an exchange 280. In this case, a second request is sent from the browser, and the second TCP connection is set as an exchange 282. The (U)SIM card and the server can communicate data with each other by use of two connections. Since the number of TCP connections has reached the maximum number, the mobile terminal (gateway) is not required to return to a listen mode and waits for a new connection request from a server. The gateway returns to the listen mode in step 286 only if disconnection is notified from the browser in step 284.

To make it possible to embody the present invention exemplarily, several commands of the BIP protocol stipulated in the ETSI TS 10223V7.1.0 standard are modified in the configuration.

In more detail, it has been proposed to parameterize the command "Open Channel" according to the maximum number of TCP connections. The number is indicated by a field "Command Qualifier" of a TLV data element "Command details" of a command prescribed in article 6.6.27 of the standard above.

"Close channel" command is parameterized using
- a first parameter indicating (a) whether only one of TCP connections is to be closed or (b) whether all of TCP connections are to be closed; and in the case of (b), the parameter indicates whether or not the BIP logical channel itself is also to be closed; and
- a second parameter identifying connections to be closed in the case of (a).

The two parameters are placed in a field "Command Qualifier" of a TLV data element "Command details" of a command prescribed in article 6.6.28 of the standard above.

A reply (TR) of a terminal to such command includes a connection identifier depending on cases.

"Receive data" command is parameterized by a TCP connection (i.e., a TCP port) which is desired by a server to recollect data.

The connection identifier is indicated by a field "Command Qualifier" of a TLV data element "Command details" of a command prescribed in article 6.6.29 of the standard above.

A response (TR) of a terminal to such command includes a connection identifier depending on cases.

"Send data" command is parameterized by a TCP connection which is to be used by the server to transmit data.

The connection identifier is indicated by a field "Command Qualifier" of a TLV data element "Command details" of a command prescribed in article 6.6.30 of the standard above.

A reply (TR) of a terminal to such command includes a connection identifier depending on cases.

An event message (a message also called an "ENVELOP command" in the pertinent standard) is parameterized by a TCP connection, i.e., a TCP port at which data is available. This message is sent from a mobile terminal to a server of a (U)SIM card. Therefore, the message includes an identifier of the pertinent connection in a field "Channel status" of a TLV data element "Channel status" of a message prescribed in article 7.5.10 of the standard above.

The event message "Channel status" sent from a terminal to a server of a (U)SIM card indicates a state of the TCP connection. Therefore, an identifier of the connection is included in a field "Channel status" of a TLV data element "Channel status" of a message prescribed in article 7.5.11 of the standard above.

### BRIEF DESCRIPTION OF DRAWINGS

[FIG. 1] A schematic diagram showing communication between a (U)SIM card operating in a server mode and a client.
[FIG. 2] A schematic time-series table showing communication between a card and a client.
[FIG. 3] A schematic diagram showing a situation in which a successive request is transmitted from a client to a (U)SIM card.
[FIG. 4] A schematic diagram showing an attempt of communication between a (U)SIM card and two clients.
[FIG. 5] A schematic time-series diagram showing an attempt of communication between a client and a server of a (U)SIM card in which the client is in an "automatic reconnection" mode.
[FIG. 6] A schematic time-series diagram showing communication between a (U)SIM card and a client in accordance with an exemplary embodiment of the present invention.
[FIG. 7] A schematic time-series diagram showing a communication disconnection scheme between a (U)SIM card and a client according to an exemplary embodiment of the present invention.
[FIG. 8] A schematic diagram showing an attempt of communication between a (U)SIM card and two clients in a range in which the present invention is embodied exemplarily.
[FIG. 9] A schematic time-series diagram showing communication between a (U)SIM card and a client in accordance with an exemplary embodiment of the present invention when the server of the (U)SIM card is in an "automatic reconnection" mode.

## Claims

1. A method of communication between a chip card '(U)SIM' provided with a Smart card web server 'SCWS' and one or more clients, said card being contained in a mobile radio terminal and communicating therewith by at least one Bearer Independent Protocol BIP channel, the method comprising:
the terminal performing a gateway function between the BIP channel and a plurality of TCP connections for one or more clients;
the BIP channel being opened by a first command, Open Channel, from the server, the command including a parameter indicating to the terminal the maximum number of TCP connections to be opened for the BIP channel; and
on being advised that data from one of the TCP connections associated with the BIP channel are available, the server transmitting a second command, Receive Data, requesting the data to the terminal, the command including a parameter identifying the TCP connection.

2. The method of communication according to claim 1, **characterized in that** the server sends data to the terminal via the BIP channel and requests the terminal to transmit the data to one or more of the clients by a third command, Send Data, the command including a parameter identifying the TCP connection to be used by the terminal for transmission.

3. The method according to claim 1 or 2, **characterized in that** the server requests the terminal to close one or more of the TCP connections to be coupled with the BIP channel by a fourth command, Close Channel, the command including a parameter identifying the one or more of the TCP connections to be closed.

4. The method according to one of claims 1 to 3, **characterized in that** the server requests the terminal to close one or all of the TCP connections to be coupled with the BIP channel by a fourth command, Close Channel, the command including a parameter indicating to the terminal whether:
a) only one of the TCP connections to be coupled with the BIP channel is to be closed; or
b) all of the TCP connections to be coupled with the BIP channel are to be closed;
the parameter, in the case of a), identifying the TCP connection to be closed.

5. The method according to claim 4, **characterized in that**, in the case of b), the fourth command further indicates whether or not the BIP channel is also to be closed.

6. The method according to one of claims 1 to 5, **characterized in that** the terminal transmits an event message, Data available event, to the server, the message indicating that data from one or more of the clients are available for the BIP channel and identifying a TCP connection to be coupled with the channel over which the data are received.

7. The method according to one of claims 1 to 6, **characterized in that** the terminal transmits to the server an event message, Channel status event, indicating that TCP connection to be coupled with the BIP channel has been set up or has been closed, and identifying the connection.

8. A chip card `(U)SIM' provided with a server 'SCWS' and communicating with a mobile terminal, which performs a gateway function between a Bearer Independent Protocol `BIP' channel and a plurality of TCP connections for one or more clients, by the BIP channel, the chip card comprising:
a software unit adapted to generate a command message for being sent by the chip card to the terminal, and to receive and process an event message for being sent by the terminal to the chip card,
wherein the software unit generates a first command, Open Channel, to open the BIP channel between the server and the terminal, the command including a parameter indicating to the terminal the maximum number of TCP connections to be opened for the BIP channel, and
wherein on being advised that data from one of the TCP connections associated with the BIP channel are available, the server generates a second command (Receive Data) requesting the data to the terminal, the command including a parameter identifying the TCP connection.

9. The chip card according to claim 8 wherein the command first command complies with the format of the "Open Channel" command of the ETSI TS 102223 V7.1.0 standard and the parameter is encoded in the "Command Qualifier" field thereof.

10. The chip card according to claim 8 wherein the server sends data to the terminal via the BIP channel and requests the terminal to transmit the data to one or more of the clients by a third command, Send Data, the command including a parameter identifying the TCP connection to be used by the terminal for transmission.

11. The chip card according to claim 10 wherein the third command complies with the format of the "Send Data" command of the ETSI TS 102223 V7.1.0 standard and the parameter is encoded in the "Command Qualifier" field thereof.

12. The chip card according to claim 8 or 10 wherein the server requests the terminal to close one or more of the TCP connections to be coupled with the BIP channel by a fourth command, Close Channel, the command including a parameter identifying the one or more of the TCP connections to be closed.

13. The chip card according to one of claims 8, 10; and 12, wherein the server requests the terminal to close one or all of the TCP connections to be coupled with the BIP channel by a fourth command, Close Channel, the command including a parameter indicating to the terminal whether:
a) only one of the TCP connections to be coupled with the BIP channel is to be closed; or
b) all of the TCP connections to be coupled with the BIP channel are to be closed;
the parameter in the case of a) identifying the TCP connection to be closed.

14. The chip card according to claim 13, wherein in the case of b), the fourth command further indicates whether or not the BIP channel is also to be closed.

15. The chip card according to claim 13 or 14 wherein the fourth command complies with the format of the "Close Channel" command of the ETSI TS 102223 V7.1.0 standard and the parameter is encoded in the "Command Qualifier" field thereof.

16. The chip card according to one of claims 8, 10, 12, 13, and 14, wherein the server receives an event message, Data available event, from the terminal, the message indicating that data from one or more of the clients are available for the BIP channel and identifying a TCP connection to be coupled with the channel over which the data are received.

17. The chip card according to claim 16 wherein the message complies with the format of the "Data available event" envelope command of the ETSI TS 102223 V7.1.0 standard and the parameter is encoded in the "Channel Status" field thereof.

18. The chip card according to one of claims 8, 10, 12, 13, 14, and 16, wherein the server receives an event message (Channel status event) from the terminal, the message indicating that TCP connection to be coupled with the BIP channel has been set up or has been closed, and identifying the connection.

19. The chip card according to claim 18 wherein the message complies with the format of the "Channel status event" envelope command of the ETSI TS 102223 V7.1.0 standard and the parameter is encoded in the "Channel Status" field thereof.

20. A mobile terminal, **characterized in that**, the terminal includes a chip card according to one of claims 8 to 19.

21. A communication system comprising a device including a SIM function `(U)SIM', provided with a server 'SCWS', and one or more clients;
wherein the device is adapted to connect to a mobile radio terminal and to communicate therewith by at least one Bearer Independent Protocol 'BIP' channel, wherein the terminal is adapted to perform a gateway function between said BIP channel and a plurality of TCP connections for one or more clients;
wherein the BIP channel is opened by a first command, Open Channel, from the server, the command including a parameter indicating to the terminal the maximum number of TCP connections to be opened for the BIP channel; and
wherein the server is adapted to, on being advised that data from one of the TCP connections associated with the BIP channel is available, transmit a second command, Receive Data, requesting the data to the terminal, the command including a parameter identifying the TCP connection.

## Patentansprüche

1. Verfahren zur Kommunikation zwischen einer Chipkarte '(U)SIM', die mit einem Smartkarten-Webserver 'SCWS' versehen ist, und einem oder mehreren Clients, wobei diese Karte in einem Mobilfunkendgerät enthalten ist und durch wenigstens einen trägerunabhängigen Protokoll-, 'BIP'-, Kanal damit kommuniziert, wobei das Verfahren aufweist:
Ausführen einer Gateway-Funktion zwischen dem BIP-Kanal und mehreren TCP-Verbindungen für einen oder mehrere Clients durch das Endgerät;
wobei der BIP-Kanal durch ein erstes Kommando, Open Channel, von dem Server geöffnet wird, wobei das Kommando einen Parameter umfasst, der dem Endgerät die maximale Anzahl von TCP-Verbindungen, die für den BIP-Kanal geöffnet werden soll, anzeigt; und
nachdem angekündigt wurde, dass Daten von einer der TCP-Verbindungen, die mit dem BIP-Kanal verbunden sind, verfügbar sind, Senden eines zweiten Kommandos, Receive Data, das die Daten anfordert, von dem Server an das Endgerät, wobei das Kommando einen Parameter enthält, der die TCP-Verbindung identifiziert.

2. Kommunikationsverfahren nach Anspruch 1, **dadurch gekennzeichnet, dass** der Server über den BIP-Kanal Daten an das Endgerät sendet und das Endgerät durch ein drittes Kommando, Send Data, auffordert, die Daten an einen oder mehrere der Clients zu senden, wobei das Kommando einen Parameter enthält, der die TCP-Verbindung identifiziert, die von dem Endgerät für die Übertragung verwendet werden soll.

3. Verfahren nach Anspruch 1 oder 2, **dadurch gekennzeichnet, dass** der Server das Endgerät mit einem vierten Kommando, Close Channel, auffordert, eine oder mehrere der TCP-Verbindungen, die mit dem BIP-Kanal gekoppelt werden sollen, zu schließen, wobei das Kommando einen Parameter enthält, der die eine oder mehreren der TCP-Verbindungen, die geschlossen werden sollen, identifiziert.

4. Verfahren nach einem der Ansprüche 1 bis 3, **dadurch gekennzeichnet, dass** der Server das Endgerät durch ein viertes Kommando, Close Channel, auffordert, eine oder alle der TCP-Verbindungen, die mit dem BIP-Kanal gekoppelt werden sollen, zu schließen, wobei das Kommando einen Parameter enthält, der dem Endgerät anzeigt, ob
a) nur eine der TCP-Verbindungen, die mit dem BIP-Kanal gekoppelt werden sollen, geschlossen werden soll; oder
b) alle der TCP-Verbindungen, die mit dem BIP-Kanal gekoppelt werden sollen, geschlossen werden sollen;
wobei der Parameter in dem Fall von a) die TCP-Verbindung, die geschlossen werden soll, identifiziert.

5. Verfahren nach Anspruch 4, **dadurch gekennzeichnet, dass** in dem Fall von b) das vierte Kommando ferner anzeigt, ob der BIP-Kanal ebenfalls geschlossen werden soll oder nicht.

6. Verfahren nach einem der Ansprüche 1 bis 5, **dadurch gekennzeichnet, dass** das Endgerät eine Ereignisnachricht, Data available event, an den Server sendet, wobei die Nachricht anzeigt, dass Daten von dem einen oder mehreren der Clients für den BIP-Kanal verfügbar sind, und eine TCP-Verbindung, die mit dem Kanal gekoppelt werden soll, über den die Daten empfangen werden, identifiziert.

7. Verfahren nach einem der Ansprüche 1 bis 6, **dadurch gekennzeichnet, dass** das Endgerät eine Ereignisnachricht, Channel status event, die anzeigt, dass die TCP-Verbindung, die mit dem BIP-Kanal gekoppelt werden soll, aufgebaut wurde oder geschlossen wurde, und die Verbindung identifiziert, an den Server sendet.

8. Chipkarte '(U)SIM', die mit einem Server 'SCWS' versehen ist und mit einem mobilen Endgerät, das eine Gateway-Funktion zwischen einem trägerunabhängigen Protokoll-, 'BIP'-, Kanal und mehreren TCP-Verbindungen für einen oder mehrere Clients durchführt, durch den BIP-Kanal kommuniziert, wobei die Chipkarte aufweist:
eine Softwareeinheit, die geeignet ist, eine Kommandonachricht zu erzeugen, um von der Chipkarte an das Endgerät gesendet zu werden, und eine Ereignisnachricht zu empfangen und zu verarbeiten, um von dem Endgerät an die Chipkarte gesendet zu werden,
wobei die Softwareeinheit ein erstes Kommando, Open Channel, erzeugt, um den BIP-Kanal zwischen dem Server und dem Endgerät zu öffnen, wobei das Kommando einen Parameter umfasst, der dem Endgerät die maximale Anzahl von TCP-Verbindungen, die für den BIP-Kanal geöffnet werden soll, anzeigt; und
wobei der Server, nachdem angekündigt wurde, dass Daten von einer der TCP-Verbindungen, die mit dem BIP-Kanal verbunden sind, verfügbar sind, ein zweites Kommando (Receive Data) erzeugt, das die Daten von dem Endgerät anfordert, wobei das Kommando einen Parameter enthält, der die TCP-Verbindung identifiziert.

9. Chipkarte nach Anspruch 8, wobei das erste Kommando dem Format des "Open Channel"-Kommandos aus dem ETSI TS 102223-Standard, V7.1.0, entspricht und der Parameter in seinem "Commander Qualifier"-Feld codiert ist.

10. Chipkarte nach Anspruch 8, wobei der Server Daten über den BIP-Kanal an das Endgerät sendet und das Endgerät durch ein drittes Kommando, Send Data, auffordert, die Daten an einen oder mehrere Clients zu senden, wobei das Kommando einen Parameter enthält, der die TCP-Verbindung identifiziert, die von dem Endgerät für die Übertragung verwendet werden soll.

11. Chipkarte nach Anspruch 10, wobei das dritte Kommando dem Format des "Send Data"-Kommandos aus dem ETSI TS 102223-Standard, V7.1.0, entspricht und der Parameter in seinem "Commander Qualifier"-Feld codiert ist.

12. Chipkarte nach Anspruch 8 oder 10, wobei der Server das Endgerät durch ein viertes Kommando, Close Channel, auffordert, die eine oder mehreren TCP-Verbindungen, die mit dem BIP-Kanal gekoppelt werden sollen, zu schließen, wobei das Kommando einen Parameter enthält, der die eine oder die mehreren TCP-Verbindungen, die geschlossen werden sollen, identifiziert.

13. Chipkarte nach einem der Ansprüche 8, 10 und 12, wobei der Server das Endgerät durch ein viertes Kommando, Close Channel, auffordert, eine oder alle der TCP-Verbindungen, die mit dem BIP-Kanal gekoppelt werden sollen, zu schließen, wobei das Kommando einen Parameter enthält, der dem Endgerät anzeigt, ob
a) nur eine der TCP-Verbindungen, die mit dem BIP-Kanal gekoppelt werden sollen, geschlossen werden soll; oder
b) alle der TCP-Verbindungen, die mit dem BIP-Kanal gekoppelt werden sollen, geschlossen werden sollen;
wobei der Parameter in dem Fall von a) die TCP-Verbindung, die geschlossen werden soll, identifiziert.

14. Chipkarte nach Anspruch 13, wobei in dem Fall von b) das vierte Kommando ferner anzeigt, ob der BIP-Kanal ebenfalls geschlossen werden soll oder nicht.

15. Chipkarte nach Anspruch 13 oder 14, wobei das vierte Kommando dem Format des "Close Channel"-Kommandos aus dem ETSI TS 102223-Standard, V7.1.0, entspricht und der Parameter in seinem "Commander Qualifier"-Feld codiert ist.

16. Chipkarte nach einem der Ansprüche 8, 10, 12, 13 und 14, wobei der Server eine Ereignisnachricht, Data available event, von dem Endgerät empfängt, wobei die Nachricht anzeigt, dass Daten von einem oder mehreren der Clients für den BIP-Kanal verfügbar sind, und eine TCP-Verbindung, die mit dem Kanal gekoppelt werden soll, über den die Daten empfangen werden, identifiziert.

17. Chipkarte nach Anspruch 16, wobei die Nachricht dem Format des Einhüllenden-Kommandos des "Data available event" aus dem ETSI TS 102223-Standard, V7.1.0, entspricht und der Parameter in seinem "Channel Status"-Feld codiert ist.

18. Chipkarte nach einem der Ansprüche 8, 10, 12, 13, 14 und 16, wobei der Server eine Ereignisnachricht (Channel status event) von dem Endgerät empfängt, wobei die Nachricht anzeigt, dass die TCP-Verbindung, die mit dem BIP-Kanal gekoppelt werden soll, aufgebaut wurde oder geschlossen wurde, und die Verbindung identifiziert.

19. Chipkarte nach Anspruch 18, wobei die Nachricht dem Format des Einhüllenden-Kommandos des "Channel status event" aus dem ETSI TS 102223-Standard, V7.1.0, entspricht und der Parameter in seinem "Channel Status"-Feld codiert ist.

20. Mobiles Endgerät, **dadurch gekennzeichnet, dass** das Endgerät eine Chipkarte nach einem der Ansprüche 8 bis 19 umfasst.

21. Kommunikationssystem, das eine Vorrichtung, die eine SIM-Funktion '(U)SIM' umfasst, die mit einem Server 'SCWS' versehen ist, und einem oder mehreren Clients aufweist,
wobei die Vorrichtung geeignet ist, sich mit einem Mobilfunkendgerät zu verbinden und durch wenigstens einen trägerunabhängigen Protokoll-, 'BIP'-, Kanal damit zu kommunizieren, wobei das Endgerät geeignet ist, eine Gateway-Funktion zwischen dem BIP-Kanal und mehreren TCP-Verbindungen für einen oder mehrere Clients durchzuführen;
wobei der BIP-Kanal durch ein erstes Kommando, Open Channel, von dem Server geöffnet wird, wobei das Kommando einen Parameter umfasst, der dem Endgerät die maximale Anzahl von TCP-Verbindungen, die für den BIP-Kanal geöffnet werden soll, anzeigt; und
wobei der Server geeignet ist, nachdem angekündigt wurde, dass Daten von einer der TCP-Verbindungen, die mit dem BIP-Kanal verbunden sind, verfügbar sind, ein zweites Kommando, Receive Data, das die Daten anfordert, an das Endgerät zu senden, wobei das Kommando einen Parameter enthält, der die TCP-Verbindung identifiziert.

## Revendications

1. Procédé de communication entre une carte à puce « (U)SIM » dotée d'un serveur web de carte intelligente « SCWS », et un ou plusieurs dispositifs clients, ladite carte étant incluse dans un terminal radio mobile et communiquant avec celui-ci par le biais d'au moins un canal de protocole indépendant du support, BIP, le procédé comprenant les étapes ci-dessous dans lesquelles :
le terminal met en oeuvre une fonction de passerelle entre le canal de protocole BIP et une pluralité de connexions de protocole TCP pour un ou plusieurs dispositifs clients ;
le canal de protocole BIP étant ouvert par le biais d'une première commande - d'ouverture de canal -, « Open Channel », en provenance du serveur, la commande incluant un paramètre indiquant au terminal le nombre maximum de connexions de protocole TCP pouvant être ouvertes pour le canal de protocole BIP ; et
lorsqu'il est informé que des données de l'une des connexions de protocole TCP associées au canal de protocole BIP sont disponibles, le serveur transmet une deuxième commande - de réception de données -, « Receive Data », demandant les données au terminal, la commande incluant un paramètre identifiant la connexion de protocole TCP.

2. Procédé de communication selon la revendication 1, **caractérisé en ce que** le serveur envoie des données au terminal par le biais du canal de protocole BIP, et demande au terminal de transmettre les données à un ou plusieurs des dispositifs clients par le biais d'une troisième commande - d'envoi de données -, « Send Data », la commande incluant un paramètre identifiant la connexion de protocole TCP devant être utilisée par le terminal en vue de la transmission.

3. Procédé selon la revendication 1 ou 2, **caractérisé en ce que** le serveur demande au terminal de fermer une ou plusieurs des connexions de protocole TCP à coupler avec le canal de protocole BIP, par le biais d'une quatrième commande - de fermeture de canal -,« Close Channel », la commande incluant un paramètre identifiant ladite une ou lesdites plusieurs des connexions de protocole TCP devant être fermées.

4. Procédé selon l'une quelconque des revendications 1 à 3, **caractérisé en ce que** le serveur demande au terminal de fermer l'une ou l'ensemble des connexions de protocole TCP à coupler avec le canal de protocole BIP, par le biais d'une quatrième commande - de fermeture de canal -,« Close Channel », la commande incluant un paramètre indiquant au terminal si :
a) une seule des connexions de protocole TCP à coupler avec le canal de protocole BIP doit être fermée ; ou
b) toutes les connexions de protocole TCP à coupler avec le canal de protocole BIP doivent être fermées ;
le paramètre, dans le cas a), identifiant la connexion de protocole TCP devant être fermée.

5. Procédé selon la revendication 4, **caractérisé en ce que**, dans le cas b), la quatrième commande indique en outre si le canal de protocole BIP doit également être fermé ou non.

6. Procédé selon l'une quelconque des revendications 1 à 5, **caractérisé en ce que** le terminal transmet un message d'événement, « Data available event » (Événement de données disponibles), au serveur, le message indiquant que des données en provenance d'un ou plusieurs des dispositifs clients sont disponibles pour le canal de protocole BIP, et identifiant une connexion de protocole TCP à coupler avec le canal sur lequel les données sont reçues.

7. Procédé selon l'une quelconque des revendications 1 à 6, **caractérisé en ce que** le terminal transmet au serveur un message d'événement, « Channel status event » (Événement d'état de canal), indiquant que la connexion de protocole TCP à coupler avec le canal de protocole BIP a été établie ou a été fermée, et identifiant la connexion.

8. Carte à puce « (U)SIM » dotée d'un serveur « SCWS » et communiquant avec un terminal mobile qui met en oeuvre une fonction de passerelle entre un canal de protocole indépendant du support, BIP, et une pluralité de connexions de protocole TCP pour un ou plusieurs dispositifs clients, par le biais du canal de protocole BIP, la carte à puce comprenant :
une unité logicielle apte à générer un message de commande destiné à être envoyé par la carte à puce au terminal, et à recevoir et traiter un message d'événement destiné à être envoyé par le terminal à la carte à puce ;
dans laquelle l'unité logicielle génère une première commande - d'ouverture de canal -, « Open Channel », visant à ouvrir le canal de protocole BIP entre le serveur et le terminal, la commande incluant un paramètre indiquant au terminal le nombre maximum de connexions de protocole TCP devant être ouvertes pour le canal de protocole BIP ; et
dans laquelle, lorsqu'il a été informé que des données de l'une des connexions de protocole TCP associées au canal de protocole BIP sont disponibles, le serveur génère une deuxième commande - de réception de données -, « Receive Data », demandant les données au terminal, la commande incluant un paramètre identifiant la connexion de protocole TCP.

9. Carte à puce selon la revendication 8, dans laquelle la première commande est conforme au format de la commande - d'ouverture de canal -, « Open Channel », de la norme ETSI TS 102223 V7.1.0, et le paramètre est codé dans le champ de qualificateur de commande « Command Qualifier » de celle-ci.

10. Carte à puce selon la revendication 8, dans laquelle le serveur envoie des données au terminal par l'intermédiaire du canal de protocole BIP, et demande au terminal de transmettre les données à un ou plusieurs des dispositifs clients par le biais d'une troisième commande - d'envoi de données -, « Send Data », la commande incluant un paramètre identifiant la connexion de protocole TCP devant être utilisée par le terminal en vue de la transmission.

11. Carte à puce selon la revendication 10, dans laquelle la troisième commande est conforme au format de la commande - d'envoi de données -, « Send Data » de la norme ETSI TS 102223 V7.1.0, et le paramètre est codé dans le champ de qualificateur de commande « Command Qualifier » de celle-ci.

12. Carte à puce selon la revendication 8 ou 10, dans laquelle le serveur demande au terminal de fermer une ou plusieurs des connexions de protocole TCP à coupler avec le canal de protocole BIP, par le biais d'une quatrième commande
- de fermeture de canal -,« Close Channel », la commande incluant un paramètre identifiant ladite une ou lesdites plusieurs des connexions de protocole TCP devant être fermées.

13. Carte à puce selon l'une quelconque des revendications 8, 10 et 12, dans laquelle le serveur demande au terminal de fermer l'une ou l'ensemble des connexions de protocole TCP à coupler avec le canal de protocole BIP, par le biais d'une quatrième commande - de fermeture de canal -,« Close Channel », la commande incluant un paramètre indiquant au terminal si :
a) une seule des connexions de protocole TCP à coupler avec le canal de protocole BIP doit être fermée ; ou
b) toutes les connexions de protocole TCP à coupler avec le canal de protocole BIP doivent être fermées ;
le paramètre, dans le cas a), identifiant la connexion de protocole TCP devant être fermée.

14. Carte à puce selon la revendication 13, dans laquelle, dans le cas b), la quatrième commande indique en outre si le canal de protocole BIP doit également être fermé ou non.

15. Carte à puce selon la revendication 13 ou 14, dans laquelle la quatrième commande est conforme au format de la commande - de fermeture de canal -,« Close Channel » de la norme ETSI TS 102223 V7.1.0, et le paramètre est codé dans le champ de qualificateur de commande « Command Qualifier » de celle-ci.

16. Carte à puce selon l'une quelconque des revendications 8, 10, 12, 13, et 14, dans laquelle le serveur reçoit un message d'événement, « Data available event » (Événement de données disponibles), en provenance du terminal, le message indiquant que des données en provenance d'un ou plusieurs des dispositifs clients sont disponibles pour le canal de protocole BIP, et identifiant une connexion de protocole TCP à coupler avec le canal sur lequel les données sont reçues.

17. Carte à puce selon la revendication 16, dans laquelle le message est conforme au format de la commande d'enveloppe « Data available event » (Événement de données disponibles) de la norme ETSI TS 102223 V7.1.0, et le paramètre est codé dans le champ d'état de canal « Channel Status » de celle-ci.

18. Carte à puce selon l'une quelconque des revendications 8, 10, 12, 13, 14, et 16, dans laquelle le serveur reçoit un message d'événement, « Channel status event » (Événement d'état de canal), en provenance du terminal, le message indiquant que la connexion de protocole TCP à coupler avec le canal de protocole BIP a été établie ou a été fermée, et identifiant la connexion.

19. Carte à puce selon la revendication 18, dans laquelle le message est conforme au format de la commande d'enveloppe « Channel status event » (Événement d'état de canal) de la norme ETSI TS 102223 V7.1.0, et le paramètre est codé dans le champ d'état de canal « Channel Status » de celle-ci.

20. Terminal mobile, **caractérisé en ce que** le terminal comprend une carte à puce selon l'une quelconque des revendications 8 à 19.

21. Système de communication comprenant un dispositif incluant une fonction SIM « (U)SIM », dotée d'un serveur « SCWS », et un ou plusieurs dispositifs clients ;
dans lequel le dispositif est apte à se connecter à un terminal radio mobile et à communiquer avec celui-ci par le biais d'au moins un canal de protocole indépendant du support, BIP, dans lequel le terminal est apte à mettre en oeuvre une fonction de passerelle entre ledit canal de protocole BIP et une pluralité de connexions de protocole TCP pour un ou plusieurs dispositifs clients ;
dans lequel le canal de protocole BIP est ouvert par le biais d'une première commande - d'ouverture de canal -, « Open Channel », en provenance du serveur, la commande incluant un paramètre indiquant au terminal le nombre maximum de connexions de protocole TCP devant être ouvertes pour le canal de protocole BIP ; et
dans lequel le serveur est apte à, lorsqu'il est informé que des données en provenance de l'une des connexions de protocole TCP associées au canal de protocole BIP sont disponibles, transmettre une deuxième commande - de réception de données -, « Receive Data », demandant les données au terminal, la commande incluant un paramètre identifiant la connexion de protocole TCP.
